# EUROPEAN PATENT APPLICATION

(11) **EP 4 711 590 A1**
(43) Date of publication of application: **18.03.2026**
(21) Application number: 25306446.3
(22) Date of filing: 10.09.2025
(51) Int. Cl.: F01K 17/02, F01K 17/04, F01K 23/10, F02C 3/20, F02C 6/18, F02C 3/22

(54) **PRODUCING LOW-CARBON ENERGY USING GAS TURBINE EXHAUST INTEGRATED REFORMING**

(30) Priority: 11.09.2024 EP 24306480
(71) Applicant: Technip Energies France, 92741 Nanterre Cedex (FR)
(72) Inventor: TOMMASELLI, Mario, 92741 Nanterre Cedex (FR); GADELLE, Dominique, 92741 Nanterre Cedex (FR); PITCHER, Matthew Bowers, 92741 Nanterre Cedex (FR); ALAEZ, Sonia Gomez, 92741 Nanterre Cedex (FR)
(74) Representative: Edson, Russell Gregory

(57) **Abstract**

A process or system for providing mechanical or electrical work may produce lower-carbon energy using gas turbine exhaust integrated reforming. The process or system may involve generating and using hydrogen, coupled to the use of available heat in the exhaust gas from a gas turbine. The process or system may provide for a reduction in the carbon footprint and an improvement in process efficiencies for energy production from gas turbines by utilizing heat from the expansion turbine exhaust to drive steam-methane reforming of the gas turbine fuel feed.

## Description

### Technical Field

The present disclosure relates generally to methods and systems for producing low-carbon energy using gas turbine exhaust integrated reforming. The disclosure can involve generating and using hydrogen, coupled to the use of available heat in the exhaust gas from a gas turbine. More specifically, but not by way of limitation, this disclosure relates to methods to reduce the carbon footprint and improve process efficiencies for energy production from gas turbines by utilizing heat from the turbine exhaust to perform steam-methane reforming of a gas similar to the gas turbine fuel feed.

### Background

Gas turbines are used in power plants or industrial facilities to convert fuels to mechanical and/or electrical energy. They can be used wherever there is a need for mechanical work or electrical production, both onshore and offshore. Many gas turbines use natural gas as fuel in a combustion chamber. Exhaust gas is expanded in an expansion turbine to produce work in the form of mechanical shaft power, often referred to as the Brayton cycle. The mechanical shaft power is used to drive an air compressor and its excess allows for mechanical work production, e.g., driving rotating equipment like a compressor or electricity production (e.g., a generator). The use of natural gas or other hydrocarbons as fuel results in carbon dioxide emissions due to combustion. The system CO₂ efficiency can be quantified by the quantity of CO₂ emitted per quantity of work created. The efficiency can be expressed as CO₂ eq/kW.h, for example.

One known method of reducing the carbon footprint of the energy produced by the gas turbine cycles is to also utilize the sensible heat from the expansion turbine exhaust gas to generate steam, for example in a heat recovery steam generator, that then can be used to drive a steam turbine Rankine cycle. This can be characterized as the "bottoming cycle" in a combined-cycle energy system. In this way, the overall efficiency of the process is increased, which results in a higher work output (e.g., in the form of electricity) at the same energy input. Thus, this can result in a lower specific CO₂ emission per unit of energy generated and higher system CO₂ efficiency.

Another method of reducing the carbon footprint of the process involves fuel-switching from hydrocarbon-rich fuel to hydrogen-enriched fuel. This can be referred to as pre-combustion decarbonization. By reducing the hydrocarbon consumption, CO₂ emissions also decrease, leading to higher system CO₂ efficiency.

An additional method of reducing the carbon footprint of the process is to capture the CO₂ from the expansion turbine exhaust gas to reduce carbon emissions. This can be referred to as post-combustion decarbonization. However, post-combustion carbon capture is carried out on a low-pressure stream and therefore demands high energy input and requires a large land area. Consequently, this method is not preferred.

Improved methods of reducing the carbon footprint and improving process efficiencies for energy production from gas turbines are desirable.

### Summary

One or more embodiments include a process for reducing the carbon emissions of a gas turbine comprising: producing an exhaust gas using a gas turbine; generating superheated steam using heat from the exhaust gas; mixing the superheated steam with a fuel comprising hydrocarbons; converting at least a portion of the hydrocarbons to hydrogen and carbon dioxide; removing at least a portion of the carbon dioxide to produce a partially decarbonized fuel; and conveying the partially decarbonized fuel to the gas turbine for combustion.

One or more embodiments include the process of the preceding paragraph, wherein the mixture of superheated steam and fuel is also heated using the exhaust gas.

One or more embodiments include the process of any of the preceding paragraphs, wherein the step of converting at least a portion of the hydrocarbons to hydrogen and carbon dioxide is performed using steam-methane reforming in a reactor with a catalyst.

One or more embodiments include the process of any of the preceding paragraphs, wherein the step of removing at least a portion of the carbon dioxide comprises using physical absorption, chemical absorption, and/or adsorption.

One or more embodiments include the process of any of the preceding paragraphs, wherein the step of removing at least a portion of the carbon dioxide comprises using an aqueous solution of a tertiary amine, for example Methyl Di-ethanol Amine (MDEA).

One or more embodiments include the process of any of the preceding paragraphs, wherein the step of removing at least a portion of the carbon dioxide uses heat from the exhaust gas or the reactor.

One or more embodiments include the process of any of the preceding paragraphs, wherein the gas turbine comprises at least one compressor, at least one expansion turbine, and at least one combustion chamber.

One or more embodiments include the process of any of the preceding paragraphs, wherein the partially decarbonized fuel is conveyed to the combustion chamber of the gas turbine for combustion.

One or more embodiments include the process of any of the preceding paragraphs, wherein the fuel comprises natural gas.

One or more embodiments include the process of any of the preceding paragraphs, wherein from 5 % to 15 % on a molar basis of the hydrocarbons in the fuel are converted into hydrogen and carbon dioxide.

One or more embodiments include the process of any of the preceding paragraphs, wherein the process decreases the carbon dioxide emissions per unit of work produced by 10 % or more compared to a conventional gas turbine with a natural gas feed.

One or more embodiments include a system for producing work comprising: a gas turbine comprising: at least one compressor, at least one expansion turbine, and at least one combustion chamber; at least one heat recovery unit; at least one boiler; at least one catalytic reactor; and at least one carbon capture unit, wherein the at least one boiler is at least partially heated by an exhaust gas from the gas turbine.

One or more embodiments include the system of the preceding paragraph, wherein the at least one heat recovery unit is also at least partially heated by the exhaust gas from the gas turbine.

One or more embodiments include any system of the preceding paragraphs, wherein the carbon capture unit is also at least partially heated by the exhaust gas, an effluent from the at least one catalytic reactor or with steam generated using one of these sources.

One or more embodiments include any system of the preceding paragraphs, further comprising a fuel line that passes through the at least one catalytic reactor, the at least one carbon capture unit, and the at least one combustion chamber of the gas turbine, respectively.

One or more embodiments include any system of the preceding paragraphs, further comprising an exhaust gas line that passes from the expansion turbine of the gas turbine, the at least one heat recovery unit, and the boiler, respectively.

One or more embodiments include any system of the preceding paragraphs, further comprising a generator connected to the gas turbine for producing electricity.

One or more embodiments include any system of the preceding paragraphs, further comprising a compressor connected to the gas turbine for producing mechanical work.

### Brief Description of the Drawings

FIG. 1 illustrates a process flow diagram for some embodiments of a process for producing work using a gas turbine and integrating the heat from the exhaust gas to reform the turbine fuel.
FIG. 2 illustrates a process flow diagram for some embodiments of a process for producing work using a gas turbine and integrating the heat from the exhaust gas to reform the turbine fuel.
FIG. 3 is a diagram for an example of a process simulation showing the configuration of operations for producing work using a gas turbine.
FIG. 4 is a simplified diagram of an example of a process simulation showing the configuration of operations for integrating the heat from the exhaust gas of a gas turbine to reform the turbine fuel.
FIG. 5 is a diagram of an example heat recovery simulation for determining availability of heat to preheat steam and natural gas.
FIG. 6 is a diagram of example heat exchangers used in determining heat recovery and availability.

### Detailed Description

The present disclosure is a novel process to generate and use hydrogen, coupled to the use of the available heat in the exhaust gas from the expansion turbine of a gas turbine. Specifically, the present disclosure takes advantage of the sensible heat available in the gas turbine exhaust to convert at least a portion of the conventional fuel (e.g., natural gas) to hydrogen through a process of methane reforming. The CO₂ generated in the process can be captured upstream of the combustor, and the resulting (partially) decarbonized fuel is then fed to the gas turbine combustor.

In some embodiments of the present disclosure, the sensible heat contained in the expansion turbine exhaust gas is used to generate high-pressure superheated steam. In some embodiments, the high-pressure superheated steam can have a pressure from 40 to 60 barg (e.g., 45 to 55 barg) and a temperature from 350 to 500 °C, (e.g., from 360 °C to 440 °C), for example. The high-pressure superheated steam is then mixed with a hydrocarbon fuel (e.g. natural gas), for example. In some embodiments, the hydrocarbon fuel is the fuel that is used to power the gas turbine (e.g., burned in the combustion chamber). The preheated fuel and steam mixture can be routed to a catalytic reactor in which steam-methane reforming and water-gas shift reactions are carried out. Hydrocarbon gas reacts with steam to produce hydrogen and carbon monoxide. The carbon monoxide reacts with steam to produce hydrogen and carbon dioxide. In some embodiments, the carbon dioxide contained in the reactor effluent is captured, such as by physical or chemical absorption, also utilizing heat available from the reactor effluent and/or the expansion turbine exhaust. In some embodiments, approximately 10% of the hydrocarbon fuel (e.g., natural gas) is converted into hydrogen. The amount can vary depending on the expansion turbine exhaust temperature. In some embodiments, the partially decarbonized fuel is fed to the combustion chamber of the gas turbine.

The process can be used in any field where there is a need for mechanical work or electrical production, whether onshore or offshore. The disclosure aims to reduce the carbon footprint, and potentially increase the efficiency, of the energy production from a simple gas turbine configuration ("open-cycle"). Some of the benefits of the invention can include a reduction of the carbon dioxide emissions per unit of work (mechanical or electrical) produced (e.g., about a 10 % reduction), an increase on energy efficiency of the energy cycle, and efficient carbon dioxide capture from converted fuel. In addition, several of the gas turbines models currently available from the market do not require modification to cope with such level of H₂ blend.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure. In all of the following, a same reference designates a stream flowing in a conduit and the conduit which conveys this stream.

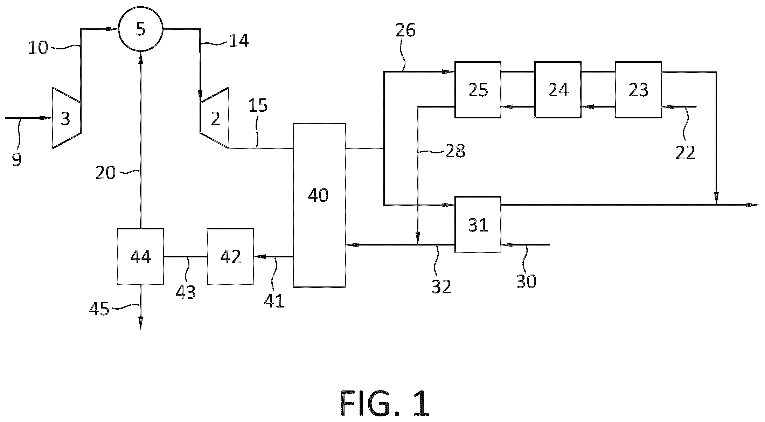

FIG. 1 illustrates some embodiments of the disclosure. In FIG. 1, combustion air is drawn in through line 9 by a compressor 3. In some embodiments (not shown in FIG. 1), the compressor 3 can comprise a compressor unit 3 that incorporates multiple compressors. The compressor 3 can be coupled mechanically to a compressor drive gas turbine unit 2. The compressed combustion air is passed from the compressor 3 through a line 10. In FIG. 1, the combustion air 10 enters into a combustion chamber 5. Some or all of the fuel that has been formed from a starting fuel by steam reforming of methane passes into the combustion chamber 5 through the fuel feed line 20, and this is then burned in the combustion chamber 5.

The hot exhaust gas that results from this combustion passes through a hot gas line 14 to an expansion turbine 1 that generates useable mechanical energy. After expansion the hot exhaust gas passes through the exhaust gas line 15.

The mechanical energy that is produced during expansion within the expansion turbine 1 is available for use on the output shaft and can be used, for example, to drive a generator to produce electrical current. The exhaust gas that has been cooled somewhat during expansion, but which is still hot, passes through the exhaust gas line 15.

In some embodiments, the exhaust gas 15 can be used to (1) generate steam for steam methane reforming (starting from cold boiler feed water) and/or (2) to superheat the fuel and/or the steam and fuel mixture for the reforming (potentially without the requirement of additional heat).

In some embodiments using the exhaust gas 15 to generate steam for steam methane reforming, the water 22 for the steam successively passes through any or all of: at least one economizer 23, at least one boiler 24, and/or at least one steam superheater 25. For example, the water 22 can move through the at least one economizer 23, the at least one boiler 24, and the at least one steam superheater 25, respectively, increasing in temperature along the way, to produce superheated steam 28. In some embodiments, the exhaust gas 15 passes through the at least one steam superheater 25, the at least one boiler 24, and/or the at least one economizer 23, respectively, decreasing in temperature while transferring heat to the water/steam along the way. In some embodiments, the water for the steam passes through at least one boiler which is heated by the exhaust gas to produce steam for steam methane reforming. In some embodiments, the water for the steam passes through at least one boiler and at least one steam superheater, at least one of which are heated by the exhaust gas to produce superheated steam for steam methane reforming.

In some embodiments using the exhaust gas to heat a fuel 30, the fuel 30 can be fed to a preheater 31 (e.g., a natural gas preheater) which is heated by the exhaust gas to form a preheated fuel stream 32.

In some embodiments using the exhaust gas to heat and/or superheat the steam and fuel mixture for the steam methane reforming, the preheated fuel 32 and superheated steam 28 can be mixed and fed to a heat recovery unit 40 which is heated by the exhaust gas 15 to produce a superheated fuel/steam mixture. In some embodiments, the fuel can be preheated (e.g., by the exhaust gas) before being mixed with the steam and fed to the heat recovery unit. In some embodiments, the steam can be heated and/or superheated (e.g., by the exhaust gas) before being mixed with the fuel and fed to the heat recovery unit. In some embodiments, both the fuel and the steam are heated by the exhaust gas before being mixed and further heated (e.g., superheated) in the heat recovery unit.

In some embodiments, after passing through the heat recovery unit 40, the superheated steam and fuel mixture 41 can be fed to a catalytic reactor 42 for steam-methane reforming. In some embodiments, the catalytic reactor can be non-adiabatic and therefore reach temperatures up to 1100 °C (e.g., from 700 °C to 1000 °C, or from 800 °C to 900 °C).

As noted, steam-methane reforming using the steam generated (at least partially) with heat from the exhaust gas can be used to produce hydrogen, increasing the hydrogen content of the fuel for the gas turbine. For example, the hydrocarbon gas fuel reacts with steam under pressures from 3 bar to 100 bar (e.g., 20 bar to 60 bar) in the presence of a catalyst to produce hydrogen and carbon monoxide. The carbon monoxide produced reacts with steam to produce hydrogen and carbon dioxide (water-gas shift reaction). In some embodiments, the hydrocarbons (fuel) and steam mixture is superheated before being fed to the reforming section or reactor. The two major reactions that take place in the reforming section are:

CnHₘ + n H₂O ⇔ n CO + (n + m/2) H₂ - Q

CO + H₂O ⇔ CO₂ + H₂ + Q

The first reaction represents the reforming reaction, in which the hydrocarbons are reformed to a mixture of H₂ and CO. During the reforming stage all higher hydrocarbons (C₂⁺) are converted to CH₄, CO and H₂, and the further conversion of CH₄ is limited by the equilibrium of the reaction. This equilibrium is favored by high outlet temperatures, a high steam to feed ratio and low pressure, thus the requirement of preheating at high temperatures.

The second reaction represents the CO shift reaction, in which the CO is converted with H₂O to CO₂ and H₂. The CO shift reaction is favored by low temperature and high steam to feed ratio.

In some embodiments, the CO₂ generated in the shift reaction can be captured and removed in line 45 from the reformed gas 43, for example in a CO₂ capture unit 44. This can increase the CO₂ efficiency of the process and reduce its carbon footprint. In some embodiments, the CO₂ can be reduced to a low residual level. In some embodiments, the CO₂ can be captured using pressure-swing adsorption. In some embodiments, the CO₂ capture can be performed using (tertiary) amine absorption technology. With such a process, the solvent can be an aqueous solution of tertiary amine, for example. In some embodiments, the solvent comprises Methyl Di-ethanol Amine (MDEA) with activator(s). For example, in the solvent, the CO₂ reversibly reacts with the amines present. In some embodiments, the loaded amine can be regenerated in a stripper using low pressure (LP) steam generated in a reboiler. In such embodiments, the relatively low boiling temperature in the reboiler (from 110 °C - 130 °C, e.g., approximately 120 °C) can allow it to receive low-level heat, such as from the outlet of a prereformer, for example.

In some embodiments, from 5 % to 15 % (on a molar basis) of the feed (e.g., natural gas) is converted to hydrogen (e.g., from 7 % to 14%, from 8 % to 12 %, from 9 % to 11 %, or about 10 %) through the steam-methane reforming.

The reformed and partially decarbonated fuel which can comprise H₂, CO, CO₂, non-converted CH₄, and steam for example, can be passed along feed line 20 from the reactor and fed to the combustion chamber 5 to be mixed with the aforementioned combustion air for combustion.

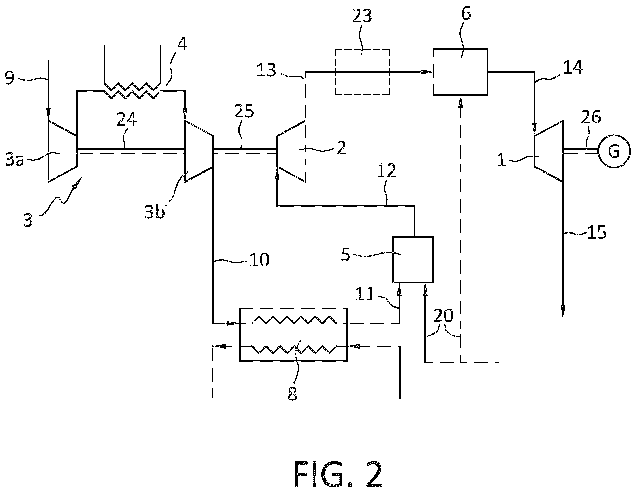

FIG. 2 illustrates some additional embodiments of the disclosure. In FIG. 2 combustion air is drawn in through line 9, by a compressor 3a of a compressor unit 3 that also incorporates a second compressor 3b. The compressed combustion air is subjected to intermediate cooling in a cooler 4 and then compressed to a still higher pressure in the second compressor 3b. Both compressors 3a and 3b may be coupled mechanically by way of shafts 24 and 25 to a compressor drive expansion turbine unit 2. In some embodiments, the compressed combustion air is passed from the second compressor 3b through a line 10 into an exhaust gas exchanger 8. In some embodiments, the exhaust gas heat exchanger 8 can be configured as a recuperator. From there the air can pass through a line 11 into a first combustion chamber 5 after being heated by indirect heat exchange, for example.

Some of the fuel that has been formed from a starting fuel by steam reforming of methane passes into the combustion chamber 5 through the fuel feed line 20, and this is then burned in the combustion chamber 5.

In some embodiments, the resulting hot gas mixture that, in addition to the combustion products, also contains excess combustion air, passes through a hot gas feed line to the compressor drive gas turbine unit 2, where it is partially expanded while giving off the drive energy that is required for the compressor unit 3, and thus cools down somewhat when this is done. Then, this gas mixture, which is still hot, passes through the hot gas feed line 13 into a second combustion chamber 6, into which fuel is also introduced through a branch line off the fuel feed line 20, and is then burned with the excess air, so that the exhaust gas is once again brought to a higher temperature.

The hot exhaust gas that results from this combustion passes through a hot gas line 14 to a gas turbine 1 that generates useable mechanical energy. After expansion the hot exhaust gas passes from through the exhaust gas line 15. The compressor drive gas turbine unit 2 and the gas turbine 1 can be arranged on a common shaft and, under some circumstances, can even be configured as a single expansion turbine aggregate in order to simplify the overall installation. It is also possible to have these driven in part by the gas turbine 1 if there are several compressor stages. This makes it possible to achieve an optimal match of the compressor and the turbines.

It is also possible to burn the fuel that is introduced in a single combustion chamber 5, so that the combustion chamber 6 can be eliminated.

The mechanical energy that is produced during expansion within the expansion turbine 1 is available for use on the output shaft 26 and can be used, for example, to drive a generator G to produce electrical current. The exhaust gas that has been cooled somewhat during expansion, but which is still hot, passes through the exhaust gas line 15.

In some embodiments, the exhaust gas 15 can be used to (1) generate steam for steam methane reforming (starting from cold boiler feed water) and/or (2) to superheat the fuel and/or the steam and fuel mixture for the reforming (potentially without the requirement of additional heat).

In some embodiments using the exhaust gas 15 to generate steam for steam methane reforming, the water for the steam successively passes through any or all of at least one economizer, at least one boiler, and/or at least one steam superheater. For example, the water can move through the at least one economizer, the at least one boiler, and the at least one steam superheater, respectively, increasing in temperature along the way. In some embodiments, the exhaust gas passes through the at least one steam superheater, the at least one boiler, and/or the at least one economizer, respectively, decreasing in temperature while transferring heat to the water/steam along the way. In some embodiments, the water for the steam passes through at least one boiler which is heated by the exhaust gas to produce steam for steam methane reforming. In some embodiments, the water for the steam passes through at least one boiler and at least one steam superheater, at least one of which are heated by the exhaust gas to produce superheated steam for steam methane reforming.

In some embodiments using the exhaust gas to heat a fuel, the fuel can be fed to a preheater (e.g., a natural gas preheater) which is heated by the exhaust gas.

In some embodiments using the exhaust gas to heat and/or superheat the steam and fuel mixture for the steam methane reforming, the fuel and steam can be mixed and fed to a heat recovery unit which is heated by the exhaust gas to produce a superheated fuel/steam mixture. In some embodiments, the fuel can be preheated (e.g., by the exhaust gas) before being mixed with the steam and fed to the heat recovery unit. In some embodiments, the steam can be heated and/or superheated (e.g., by the exhaust gas) before being mixed with the fuel and fed to the heat recovery unit. Preferably, both the fuel and the steam are heated by the exhaust gas before being mixed and further heated (e.g., superheated) in the heat recovery unit. In some embodiments, after passing through the heat recovery unit, the superheated steam and fuel mixture can be fed to a catalytic reactor for steam-methane reforming. In some embodiments, the catalytic reactor can be non-adiabatic and therefore reach temperatures up to 1100 °C (e.g., from 700 °C to 1000 °C, or from 800 °C to 900 °C).

As noted, steam-methane reforming using the steam generated (at least partially) with heat from the exhaust gas can be used to produce hydrogen, increasing the hydrogen content of the fuel for the gas turbine. For example, the hydrocarbon gas fuel reacts with steam under pressures from 3 bar to 100 bar (e.g., 20 bar to 60 bar) in the presence of a catalyst to produce hydrogen and carbon monoxide. The carbon monoxide produced reacts with steam to produce hydrogen and carbon dioxide (water-gas shift reaction).

In some embodiments, the CO₂ generated in the shift reaction can be captured from the reformed gas. This can increase the CO₂ efficiency of the process and reduce its carbon footprint. In some embodiments, the CO₂ can be reduced to a low residual level. In some embodiments, the CO₂ can be captured using pressure-swing adsorption. In some embodiments, the CO₂ capture can be performed using (tertiary) amine absorption technology. With such a process, the solvent can be an aqueous solution of tertiary amine, for example. In some embodiments, the solvent comprises Methyl Di-ethanol Amine (MDEA) with activator(s). For example, in the solvent, the CO₂ reversibly reacts with the amines present. In some embodiments, the loaded amine can be regenerated in a stripper using low pressure (LP) steam generated in a reboiler. In such embodiments, the relatively low boiling temperature in the reboiler (from 110 °C - 130 °C, e.g., approximately 120 °C) can allow it to receive low-level heat, such as from the outlet of a prereformer, for example.

In some embodiments, from 5 to 15 % (molar basis) of the feed (e.g., natural gas) is converted to hydrogen (e.g., from 7 % to 14%, from 8 % to 12 %, from 9 % to 11 %, or about 10 %) through the steam-methane reforming and water-gas shift.

The reformed (e.g., partially decarbonated) fuel which can comprise H₂, CO, CO₂, non-converted CH₄, and steam for example, can be passed along feed line 20 from the reactor and fed to the combustion chambers 5 and/or 6 to be mixed with the aforementioned combustion air for combustion.

### Simulation Examples

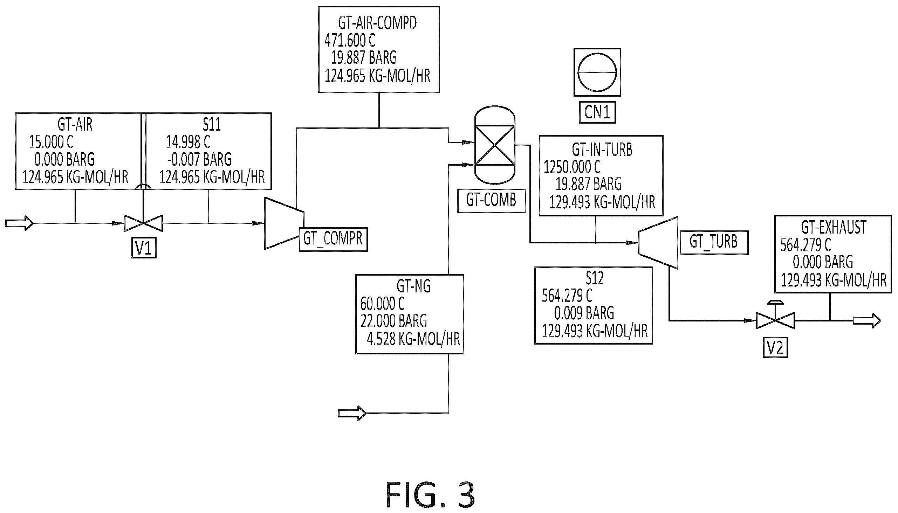

To evaluate the consumptions and efficiencies of the described processes, process simulations were performed using PRO-II software. The thermodynamic model used was Peng-Robinson. A base case scenario (Comparative Example 1) was developed according to the diagram embodied in FIG. 3. The conditions for the input steams and their compositions are shown in Table 1 below.

**Table 1**

| Name | | | GT-AIR | GT-NG |
|---|---|---|---|---|
| Total Mass Rate | | kg / s | 1 | |
| Temperature | | C | 15 | 60 |
| Pressure | | barg | 0 | 22 |

| **Total Molar Component Fractions** | | | | |
|---|---|---|---|---|
| | H₂O | | 1.45% | |
| | NITROGEN | | 76.94% | |
| | OXYGEN | | 20.65% | |
| | ARGON | | 0.94% | |
| | CARBON DIOXIDE | | 0.03% | |
| | METHANE | | 0.00% | 100% |

For the simulation, the flowrate of GT-AIR was set to 1 kg/s, as the flowrate does not impact the specific performance of the system. The valve V1 in FIG. 3 has a pressure drop of 7.4 mbar and represents the pressure drop of the inlet of the compressor. GT_COMPR represents the compressor. For the compressor, the outlet pressure was specified as 19.887 barg and the outlet temperature was specified as 471.6 °C (corresponding to an adiabatic efficiency of 83.67%). GT-COMB is the combustor of the gas turbine. It was simulated with a Gibbs reactor. The flowrate of GT-NG was controlled so that the exhaust of GT-COMB was 1250 °C (with controller CN1). GT_TURB is the expansion turbine of the gas turbine. It was simulated with an outlet pressure of 9.15 mbarg and an efficiency of 89.38 %. The valve V2 represents a back-pressure of the expansion turbine due to the presence of heat recovery. The exhaust pressure was atmospheric.

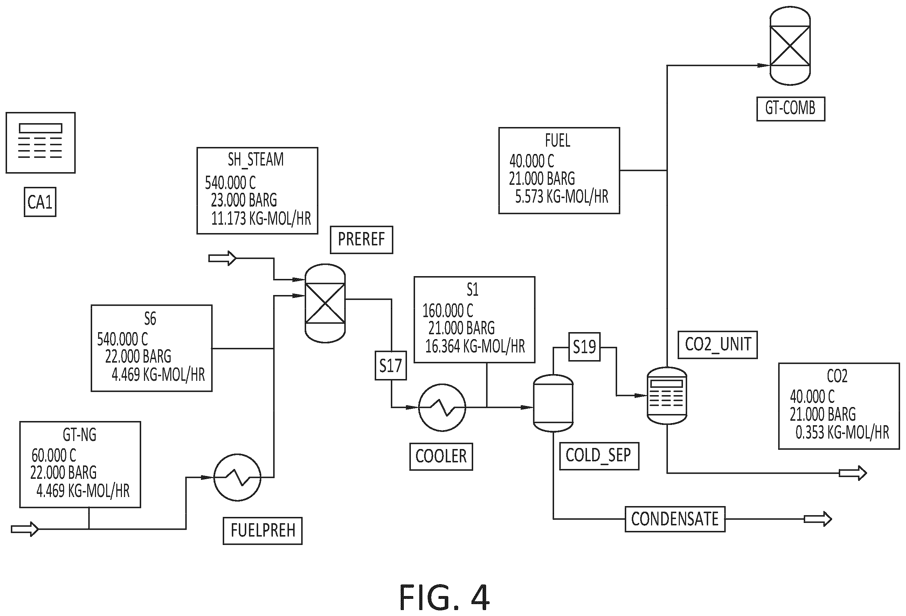

Example 1 was performed similarly to Comparative Example 1 and FIG. 3 above, but adding the additional section embodied in FIG. 4 to modify the fuel to the combustor. For Example 1, the controller CN1 also modified the flow of GT-NG stream to achieve a temperature at the outlet of the combustor of 1250 °C. The inputs to the rest of the components (i.e. compressor, expansion turbine and valves) were the same as for the base case embodiment Comparative Example 1.

After modifying the flow of GT-NG with the controller, a calculator (CA1) computed how much steam was required to have Steam to carbon ratio of 2.5 mol/mol at the inlet of the reactor shown in FIG. 4 as PREREF. The conditions of the steam were 540 °C and 23 barg. The heat exchanger FUEL PREH was set such that the outlet temperature is the required temperature at the inlet of the reactor PREREF (540 °C).

The reactor PREREF was simulated with an adiabatic Gibbs reactor with pressure drop equal to 1 bar. After the reactor, Example 1 features a cooler, set to 160 °C (to calculate the duty available for low heat recovery for the CO₂ capture unit) and a cold separator set to 40 °C to remove the water and achieve the proper conditions of operation of the CO₂ capture unit. The saturated stream then enters the stream calculator (CO2_unit), that removes 99.5% of the CO₂ that enters.

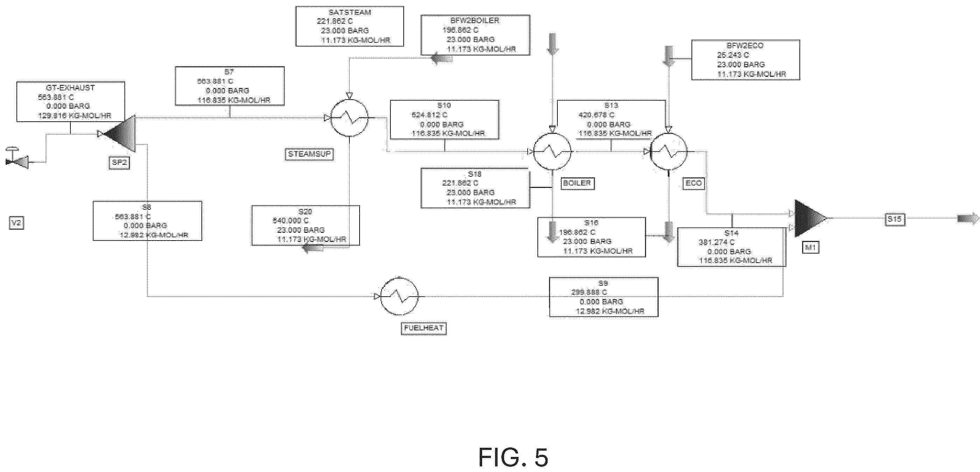

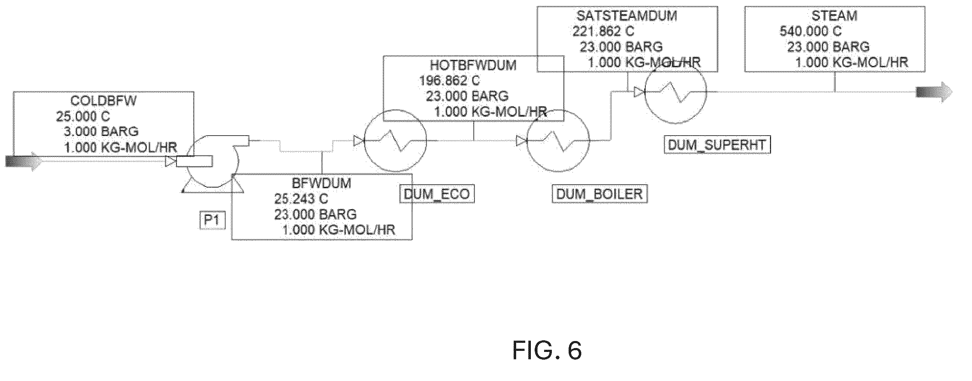

In order to determine if there was enough heat available to preheat the amount of steam and natural gas (NG) to the required temperature (540 °C) without temperature pinches in the heat recovery, the heat recovery was simulated as shown in FIG. 5. The amount of steam was the same as computed before, equal to the stream SH_STEAM. The conditions of the steam in each heat exchanger was determined by conditions calculated in the "dummy" heat exchangers shown in FIG. 6.

Starting with cold water at 25 °C and 3 barg, the water was pressurized to 23 barg with a pump and then preheated in DUM_ECO to a temperature 15 °C below the bubble point. In DUM_BOILER, the specification was saturated vapor at the outlet and in DUM_SUPERHT, the specification was 540 °C.

Example 2 was simulated in the same way with the exception of how the stream GT_NG was computed. In Example 2, the excess air for the combustion was kept at the same value as the excess air in the base case Comparative Example 1. Thus, it was performed without a controller.

The summary of the key performance indicator outputs of the base case Comparative Example 1, and Examples 1 and 2 are shown below in Table 2.

**Table 2**

| Key performance indicators | Units | Comparative Example 1 | Example 1 | Example 2 |
|---|---|---|---|---|
| Fuel consumption (natural gas) | kg/kWh | 0.191 | 0.188 | 0.189 |
| | Relative value with respect to Comp. Ex. 1 | 100.0% | 98.2% | 99.1% |
| CO₂ captured | kg/kWh | 0.000 | 0.041 | 0.043 |
| CO₂ emitted | kg/kWh | 0.529 | 0.479 | 0.481 |
| | Relative value with respect to Comp. Ex. 1 | 100.0% | 90.5% | 90.9% |
| Lower Heating Value (LHV) efficiency | % | 37.6% | 38.3% | 38.0% |
| | Absolute difference with respect to Comp. Ex. 1 | 0.0% | 0.7% | 0.4% |
| | Relative value with respect to Comp. Ex. 1 | 100.0% | 101.8% | 100.9% |

As can be seen from Table 2, Example 1 and Example 2 consume less natural gas fuel than the base case Comparative Example 1, with Example 1 consuming slightly less relative to Example 2. In addition, Example 1 and Example 2 emit around 9-10 % less CO₂ than Comparative Example 1, with Example 1 emitting slightly less than Example 2. As can be seen from Table 2, this is related to the CO₂ captured by Examples 1 and 2. As a result, Examples 1 and 2 have higher LHV efficiency compared to Comparative Example 1. Example 1 has a slightly higher efficiency than Example 2.

The foregoing description of certain examples including the illustrated examples and process simulations above, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples.

## Claims

1. A process for reducing the carbon emissions of a gas turbine comprising:
producing an exhaust gas using a gas turbine;
generating superheated steam using heat from the exhaust gas;
mixing the superheated steam with a fuel comprising hydrocarbons;
converting at least a portion of the hydrocarbons to hydrogen and carbon dioxide;
removing at least a portion of the carbon dioxide to produce a partially decarbonized fuel; and
conveying the partially decarbonized fuel to the gas turbine for combustion.

2. The process of claim 1, wherein the mixture of superheated steam and fuel is also heated using the exhaust gas.

3. The process of claims 1, wherein the step of converting at least a portion of the hydrocarbons to hydrogen and carbon dioxide is performed using steam-methane reforming in a reactor with a catalyst.

4. The process of claim 1, wherein the step of removing at least a portion of the carbon dioxide comprises using physical absorption, chemical absorption, or adsorption;
or wherein the step of removing at least a portion of the carbon dioxide comprises using an aqueous solution of a tertiary amine; optionally, wherein the tertiary amine is Methyl Di-ethanol Amine (MDEA);
or wherein the step of removing at least a portion of the carbon dioxide uses heat from the exhaust gas or the reactor.

5. The process of claim 1, wherein the gas turbine comprises at least one compressor, at least one expansion turbine, and at least one combustion chamber; optionally, wherein the partially decarbonized fuel is conveyed to the combustion chamber of the gas turbine for combustion.

6. The process of claim 1, wherein the fuel comprises natural gas.

7. The process of claim 1, wherein from 5 % to 15 % of the hydrocarbons in the fuel are converted into hydrogen and carbon dioxide.

8. The process of claim 1, wherein the process decreases the carbon dioxide emissions per unit of work produced by 10 % or more compared to a conventional gas turbine with a natural gas feed.

9. A system for producing work comprising:
a gas turbine comprising:
at least one compressor,
at least one expansion turbine, and
at least one combustion chamber;
at least one heat recovery unit;
at least one boiler;
at least one catalytic reactor; and
at least one carbon capture unit,
wherein the at least one boiler is at least partially heated by an exhaust gas from the gas turbine.

10. The system for producing work of claim 9, wherein the at least one heat recovery unit is also at least partially heated by the exhaust gas from the gas turbine.

11. The system for producing work of claim 9, wherein the carbon capture unit is also at least partially heated by the exhaust gas or an effluent from the at least one catalytic reactor.

12. The system for producing work of claim 9, further comprising a fuel line that passes through the at least one catalytic reactor, the at least one carbon capture unit, and the at least one combustion chamber of the gas turbine, respectively.

13. The system for producing work of claim 9, further comprising an exhaust gas line that passes from the expansion turbine of the gas turbine, the at least one heat recovery unit, and the boiler, respectively.

14. The system for producing work of claim 9, further comprising a generator connected to the gas turbine for producing electricity.

15. The system for producing work of claim 9, further comprising a compressor connected to the gas turbine for producing mechanical work.
